# FASCICULE DE BREVET EUROPEEN

(11) **EP 1 406 425 B1**
(45) Date de publication et mention de la délivrance du brevet: **21.06.2006**
(21) Numéro de dépôt: 03102706.3
(22) Date de dépôt: 04.09.2003
(51) Int. Cl.: H04L 29/06, H04L 12/28

(54) **Procédé de production, par un fournisseur d'accès, d'un identifiant isolant multimédia**
Verfahren zur Herstellung einer isolierenden Multimediakennzeichnung von einem Zugriffsanbieter
Method for producing a multimedia isolating identifier by an access provider

(30) Priorité: 24.09.2002 FR 0211803
(43) Date de publication de la demande: 07.04.2004
(73) Titulaire: Société Française du Radiotéléphone-SFR, 75008 Paris (FR)
(72) Inventeur: Wary, Jean-Philippe, 92340, BOURG LA REINE (FR)
(74) Mandataire: Schmit, Christian Norbert Marie

(56) Documents cités:
- WO-A-00/69182
- GB-A- 2 372 175
- US-A- 5 375 251
- US-A1- 2001 036 224

## Description

L'invention a pour objet un procédé de production, par un fournisseur d'accès, d'un identifiant isolant multimédia. Le domaine de l'invention est celui de l'accès, par un utilisateur, à un fournisseur de contenu via un fournisseur d'accès. En particulier le domaine de l'invention est celui des passerelles existant entre les réseaux de téléphonie cellulaire, et les réseaux de type Internet, voix, SMS, ou autres supports de transmission d'un contenu multimédia ou monomédia.

Un but de l'invention est de préserver la vie privée de l'utilisateur.

Un autre but de l'invention est la préservation des bases de données clients des acteurs d'un réseau, et de limitation des activités d'analyse comportementale.

Un autre but de l'invention est de contribuer à la préservation du secret des correspondances.

Un autre but de l'invention est de permettre à une entité juridique autorisée d'identifier civilement un utilisateur.

Un autre but de l'invention est de permettre au fournisseur de contenu de gérer un ou plusieurs contextes pour les utilisateurs se connectant audit fournisseur de contenu.

Un autre but de l'invention est de rester compatible avec le plus grand nombre de réseaux.

Dans l'état de la technique il existe plusieurs moyens pour un fournisseur de contenu d'identifier un utilisateur qui accède à l'un de ses services. Ces moyens dépendent du média utilisé par l'utilisateur pour accéder au service. On distingue principalement quatre modes d'accès, mais la liste n'est pas exhaustive. Un premier mode d'accès est un accès de type Internet. Le mode Internet se subdivise lui-même en deux sous-modes que l'on peut qualifier de mode connecté et mode non connecté. Le mode Internet connecté est un mode de connexion utilisant un protocole de type HTTP (Hyper Text Transfer Protocol, ou protocole de transmission hypertexte) ou WTP (Wireless Transfer Protocol, ou protocole de transmission sans fil.). Un serveur, par exemple HTTP, est un appareil communicant via un réseau, par exemple Internet, et selon le protocole HTTP. Un tel serveur héberge des sites WEB (ou Internet) ou WAP (ou Internet adapté au téléphone mobile). Il existe aussi un mode d'accès Internet non connecté via un protocole de type SMTP (Simple Mail Transfer Protocol, ou protocole simple de transfert de mail), dans lequel la connexion consiste en fait en un échange de message électronique de type mail.

Un autre mode d'accès est un mode d'accès par opérateur qui se subdivise lui aussi en deux sous-modes. Un premier sous-mode d'accès, et troisième mode d'accès, est alors un mode d'accès que 'on peut qualifier de non connecté via un protocole de type SMS (Short Message Service, ou service de message court), ou MMS (Multimedia Message Service, ou service de message multimédia). Un quatrième mode d'accès est un mode par opérateur connecté que l'on appelle aussi mode vocal dans lequel l'utilisateur accède se connecte à un serveur vocal.

Pour les quatre modes d'accès, il existe une solution type simple qui consiste à réaliser une interface proposant la saisie d'un identifiant et d'un mot de passe lors d'une connexion à un serveur. Dans la mesure où l'utilisateur se connectant au serveur du fournisseur de contenu le fait via un téléphone mobile, les moyens mis à la disposition de l'utilisateur, pour saisir l'identifiant (ou login) et le mot de passe, sont limités par l'interface utilisateur du téléphone. Soit l'identifiant et le mot de passe sont intégralement numériques, ils sont alors malaisés à retenir et faciles à deviner. Soit l'identifiant et le mot de passe sont alphanumériques, et dans ce cas il est fastidieux de les saisir avec un clavier ne comportant que 9 touches. De plus cette étape de saisie constitue une étape supplémentaire pour l'utilisateur ce qui dissuade, dans la plupart des cas, un utilisateur de téléphone mobile de se connecter au site proposant une interface de connexion du type identifiant et mot de passe.

Une autre solution, dans le cas des serveurs du premier type, consiste à se servir d'un cookie, ou témoin. Un cookie est un petit fichier enregistré sur l'appareil de l'utilisateur. Lors d'une connexion à un fournisseur de contenu, le fournisseur de contenu peut alors accéder à ce cookie pour identifier l'utilisateur. Un problème de cette solution réside dans le fait qu'il est possible de voler un cookie par des moyens électroniques ou autre. L'utilisation d'un cookie n'est donc pas compatible avec des impératifs forts de sécurité. Un autre problème réside alors dans le fait que les cookies ont une relativement mauvaise presse, ce qui incite les utilisateurs à les effacer. De plus l'utilisateur peut configurer l'application, ou navigateur, qu'il utilise pour se connecter au fournisseur de contenu, afin que cette application n'accepte pas les cookies. Dans ce cas l'utilisateur se voit dans l'impossibilité de se connecter au serveur du fournisseur de contenu.

Pour les troisième et quatrième modes d'accès, la plupart du temps le fournisseur de contenu a accès au numéro de téléphone de la personne qui appelle le serveur. Le fournisseur de contenu est donc capable d'identifier la personne via ce numéro de téléphone. Cela ne va pas sans poser un problème de protection de la vie privée. En effet, il est tout à fait légitime qu'un utilisateur ne souhaite pas être identifié physiquement lorsqu'il se connecte à un serveur d'un fournisseur de contenu. On doit en effet pouvoir acquérir un bien de façon anonyme. Il est alors possible d'essayer de se connecter en masquant son numéro, mais dans ce cas il est impossible de facturer le service et donc de se connecter effectivement. A l'heure actuelle, la seule solution consiste donc à ne pas se connecter à ce fournisseur de contenu.

Dans l'état de la technique, le document "GB 2 372 175 A" montre (page 6) un identifiant comportant un premier champ permettant de désigner la nature de l'identifiant, un deuxième champ permettant de désigner l'utilisateur et un troisième champ permettant de désigner la variabilité. Toutefois cet identifiant de l'état de la technique ne contient pas de champ permettant de désigner le producteur de l'identifiant, le format selon lequel les champs de l'identifiant sont construits n'est pas précisé et nulle part n'est précisé que l'identifiant a une taille maximale de 15 digits.

Toutes les solutions envisagées dans l'état de la technique ne résolvent de plus pas le problème du format des données. En effet d'un réseau à l'autre, et donc d'un protocole à l'autre, les caractéristiques de transmission ne sont pas les mêmes. Ces caractéristiques concernent principalement le codage des informations transmises (numérique, alphanumérique,...), ainsi que la quantité d'information transmissible. Ainsi, un identifiant utilisable sur Internet ne l'est pas forcément sur un réseau vocal et ou SMS.

Dans la description, et dans la pratique, se connecter / accéder à un fournisseur de contenu est équivalent à se connecter à un serveur d'un fournisseur de contenu.

L'invention résout ces problèmes en permettant de produire un identifiant que l'utilisateur présente au fournisseur de contenu, et ce quel que soit le type de réseau, cet identifiant ne permettant pas à un autre, que la personne ayant produit cet identifiant, d'identifier civilement l'utilisateur. Un tel identifiant permet bien de protéger la vie privée de l'utilisateur, un tel identifiant permet bien d'identifier l'utilisateur via une requête produite par l'autorité souhaitant identifier l'utilisateur et comportant l'identifiant ainsi que la date à laquelle a été produit cet identifiant.

Un identifiant selon l'invention comporte au moins un premier champ identifiant de l'utilisateur. D'autres champs peuvent permettre d'assurer la variabilité de l'identifiant, et ou la qualification de l'identifiant. Cette variabilité est assurée soit par un aléa, soit par une volonté exprimée de l'utilisateur. La qualification de l'identifiant est constituée par des informations permettant de donner des indices d'interprétation sur la nature de l'identifiant. De tels indices sont, par exemple, l'opérateur ayant produit l'identifiant, la durée de vie de l'identifiant... . Le premier champ est chiffré de manière à ce que le premier champ ne soit accessible à personne. Seul le fournisseur d'accès, c'est à dire la personne produisant l'identifiant isolant, est capable d'inverser le chiffrement et donc d'identifier physiquement l'utilisateur.

L'ensemble des champs de l'identifiant selon l'invention sont, y compris ceux chiffrés, à un format compatible avec le plus contraignant des réseaux sur lequel doit être véhiculé l'identifiant. Dans la pratique il s'agit du réseau de téléphonie et de ses contraintes de définition d'un identifiant. Le réseau de téléphonie impose en effet une longueur maximal et un codage en digit pour l'identifiant.

Les buts poursuivis par l'invention sont donc bien atteints.

L'invention a donc pour objet un Procédé de production, par une passerelle d'un fournisseur d'accès, d'un premier identifiant isolant utilisateur multimédia compatible avec des identifiants d'un réseau de téléphonie, ladite passerelle produit le premier identifiant au format suivant:
- le premier identifiant comporte N digits identifiant permettant de désigner l'utilisateur,
- le premier identifiant comporte au moins un digit de nature permettant de définir la nature du premier identifiant,
- le premier identifiant comporte M digits de variabilité,
caractérisé en ce que:
- les M digits de variabilité dépendent du digit de nature,
- le premier identifiant a une taille maximale de 15 digits, un digit étant une représentation informatique permettant de représenter/coder un chiffre décimal ou hexadécimal et comportant 4 bits,
- le premier identifiant comporte au moins un digit producteur permettant de désigner le producteur de l'identifiant.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration de moyens utiles à la mise en oeuvre du procédé selon l'invention.
- Figure 2 : une illustration d'une structure possible pour un identifiant isolant selon l'invention.
- Figure 3 : une illustration d'étapes de mise en oeuvre du procédé selon l'invention.

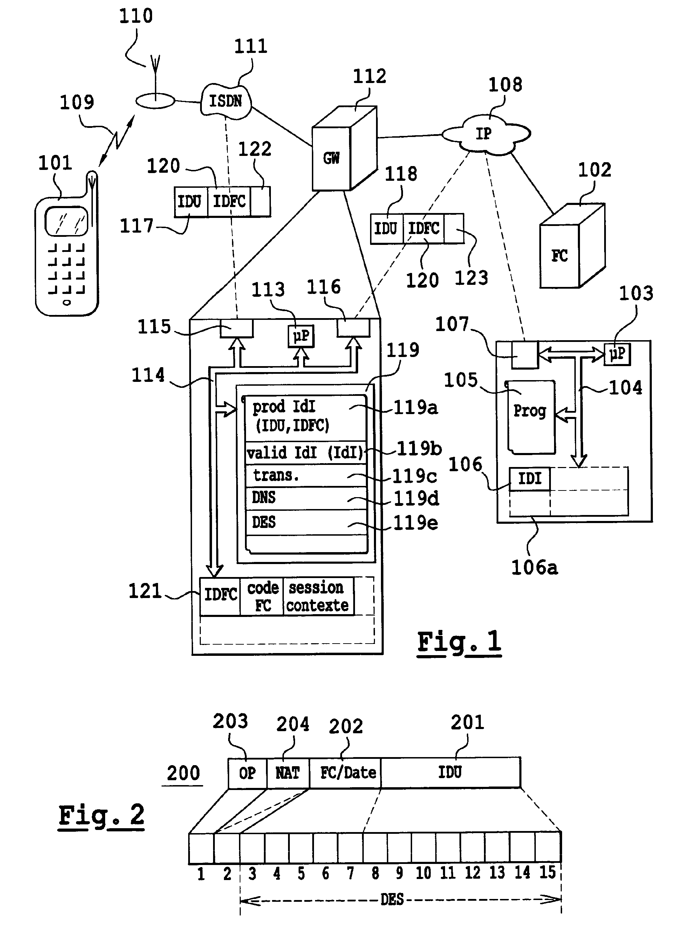

La figure 1 montre un appareil 101 qu'utilise l'utilisateur pour se connecter à un serveur 102 d'un fournisseur de contenu. Dans la pratique l'appareil 101 est un téléphone mobile qui est capable d'établir une communication selon de multiples protocoles. Parmi ces protocoles on peut citer des protocoles compatibles avec Internet, avec la voix, et avec le protocole SMS. En d'autres termes, l'appareil 101, qui est un téléphone mobile 101, est capable d'établir une communication selon un mode WAP, selon un mode vocal, et/ou, selon un mode SMS.

Le serveur 102 est capable de communiquer selon au moins l'un des protocoles précédemment cités pour le téléphone 101. Le serveur 102 comporte un microprocesseur 103 connecté à un bus 104 interne au serveur 102. Le bus 104 permet de connecter le microprocesseur à une mémoire 105 de programme, à une mémoire 106 d'utilisateur, et à des circuits 107 interface avec, par exemple, le réseau 108 Internet.

La mémoire 105 comporte des codes instruction qui commandent le microprocesseur lorsque celui-ci effectue différentes actions. En particulier, la mémoire 105 comporte des codes instruction pour la mise en oeuvre d'au moins un des protocoles précédemment cités.

La mémoire 106 est, par exemple, une base de données. A cet effet la mémoire 106 est décrite comme une table comportant au moins autant de lignes que d'utilisateur susceptible de se connecter, ou s'étant déjà connecté, au serveur 102. Chaque ligne comporte un certain nombre de champs. Une colonne 106a correspond à un champ identifiant utilisateur. Il s'agit là d'un identifiant selon l'invention. Lorsque le serveur 102 reçoit une requête, cette requête comporte cet identifiant. Cela permet au serveur 102 d'identifier l'utilisateur, et de déterminer, par exemple, des préférences de l'utilisateur. Un ensemble de préférences s'appelle aussi un contexte. Un contexte comporte diverses informations permettant à l'utilisateur de personnaliser l'apparence, et ou le contenu, des informations qui lui sont présentées par le serveur auquel l'utilisateur se connecte.

Dans l'exemple la mémoire 106 est comprise dans le serveur 102. Dans la pratique cette mémoire/base de données 106 peut être hébergée par un autre serveur auquel le serveur 102 peut se connecter pour accéder au contenu de ladite base de données.

Lorsqu'un utilisateur utilise l'appareil 101 pour se connecter au serveur 102, le téléphone 101 établit une liaison 109 hertzienne avec une station 110 de base. La station 110 de base est elle-même connectée, via un réseau 111, par exemple ISDN, à une passerelle 112 d'un fournisseur d'accès auquel est, par exemple, abonné l'utilisateur du téléphone 101. Le réseau 111 ISDN est en fait tout ou partie d'un réseau téléphonique commuté. Dans la pratique le réseau 111 peut être n'importe quelle solution technique permettant de connecter une station de base à la passerelle 112 du fournisseur d'accès. Un fournisseur d'accès est, par exemple, un opérateur de téléphonie mobile.

Le fournisseur de contenu est, par exemple, une passerelle d'accès au réseau Internet, aussi connu sous le nom de portail Internet, un serveur vocal de météo, un serveur SMS standard.

La passerelle 112 comporte un microprocesseur 113, connecté à un bus 114. A ce bus 114 sont aussi connectés des circuits 115 interface avec le réseau 111, et des circuits 116 interface avec le réseau 108. La passerelle 112 est donc une passerelle entre les réseaux 111 et 108.

Sur le réseau 111, l'appareil 101, et donc son utilisateur, est identifié par un identifiant 117 utilisateur. Sur le réseau 108, l'utilisateur de l'appareil 101 est identifié, au moins, par un identifiant 118 isolant. Un rôle de la passerelle 112 est d'effectuer le lien entre l'identifiant 117 et l'identifiant 118 isolant. Un autre rôle, classique, de la passerelle 112 est d'assurer la conversion de protocole entre les protocoles utilisés sur le réseau 111, et les protocoles utilisés sur le réseau 108. L'identifiant 117 est, par exemple, le numéro de téléphone de l'utilisateur de l'appareil 101. Un tel identifiant 117 est un identifiant public qui permet à tous d'associer à cet identifiant 117 à une personne physique. Un but de l'invention est d'empêcher le fournisseur de contenu d'identifier physiquement les personnes qui se connectent au serveur 102.

La passerelle 112 comporte une mémoire 119 de programme. La mémoire 119 comporte différentes zones comportant des codes instruction correspondant chacune à une tâche effectuée par le microprocesseur 113.

Parmi les zones de la mémoire 119, on peut distinguer une zone 119a comportant des codes instruction correspondant à la production, par la passerelle 112, c'est à dire en fait par le microprocesseur 113, de l'identifiant 118 isolant à partir d'au moins de l'identifiant 117, et dans une mise en oeuvre préférée, d'un identifiant 120 du fournisseur de contenu.

Une zone 119b comporte des codes instruction permettant à la passerelle 112 de valider un identifiant 118 lorsque la passerelle 112 reçoit une requête de la part du serveur 102. Une zone 119c comporte les codes instruction permettant à la passerelle 112 d'identifier un utilisateur à partir d'un identifiant 118 isolant. Cela est utilisé pour transmettre une réponse du serveur 102 à l'appareil 101 par exemple. Une zone mémoire 119d comporte des codes instruction permettant de déterminer un modificateur d'identifiant à partir d'un identifiant 120 d'un fournisseur de contenu. Une zone 119e comporte des codes instruction permettant d'effectuer un transcodage qui dans notre exemple est un chiffrement. De préférence il s'agit d'un chiffrement symétrique. Mais il pourrait s'agir d'une simple permutation, ou embrouillage.

La passerelle 112 comporte une mémoire 121 permettant d'associer un identifiant d'un fournisseur de contenu à un code pour ce fournisseur de contenu, et à une nature d'un identifiant isolant à produire.

La figure 2 illustre une structure possible pour un identifiant isolant selon l'invention et son adaptation à la transmission sur un réseau de téléphonie via le champ NDS défini dans les normes de téléphonie, en particulier dans les norme de téléphonie vocale. La norme prévoie un codage du champ NDS sur 15 digits. Un fournisseur d'accès n'a pas besoin d'utiliser tout l'espace prévu par la norme pour identifier un abonné. Par contre les protocoles réseau achemine toujours 15 digits pour le champ NDS que l'on peut donc utiliser pour véhiculer de l'information identifiant l'utilisateur, et de l'information additionnelle.

La figure 2 montre un identifiant 200 isolant comportant quatre champs. Un premier champ 201, d'une longueur de N digits, correspond à l'identifiant 117 identifiant l'utilisateur de l'appareil 101 sur le réseau 111. Un deuxième champ 202, d'une longueur de M digits, correspond à un moyen de faire varier l'identifiant 200 isolant en fonction, soit d'un desiderata de l'utilisateur, soit d'un code de fournisseur de contenu. Les champs 202 et 201 sont chiffrés grâce aux codes instruction de la zone 119e.

Dans une variante, l'identifiant 200 isolant comporte un champ 203 permettant d'identifier le fournisseur d'accès ayant produit l'identifiant, et un champ 204 permettant, par exemple de coder une version, et ou nature, pour l'identifiant 200 isolant. L'identifiant 200 isolant est utilisé comme identifiant 118 isolant lors des communications entre la passerelle 112 et le serveur 102. C'est l'identifiant 118 isolant qui est enregistré dans la colonne 106a de la mémoire 106 d'utilisateur du serveur 102.

La figure 2 montre que la somme des longueurs des champs de l'identifiant 200 n'excède pas la longueur du champ NDS, c'est à dire 15 digits. Un digit est une représentation informatique permettant de représenter/coder un chiffre décimal. Dans la pratique un digit comporte 4 bits et seuls les codages 0000, 0001, 0010, 0011, 0100, 0101, 0110, 0111, 1000, et 1001 sont utilisées. Le principe général est qu'un tel digit est capable de coder 16 états, en général seuls 10 de ces états sont utilisés. N'importe quel sélection de 10 parmi les 16 convient donc. La figure 2 illustre aussi de longueurs pour les champs 201 à 204. Ces longueurs des champs de l'identifiant sont adaptables en fonction de la situation. Ainsi, par exemple, si l'on souhaite avoir plus d'un digit pour le champ 203, on peut raccourcir le champ 201 ou 202. De même la localisation des champs est indicative. Par exemple le champ 202 occupe, dans notre exemple, les digits 3 à 7, dans la pratique, si M vaut 5, il peut occuper 5 digits parmi les 15 du champ NDS. Il en va de même pour la localisation des champs 201, 203 et 204.

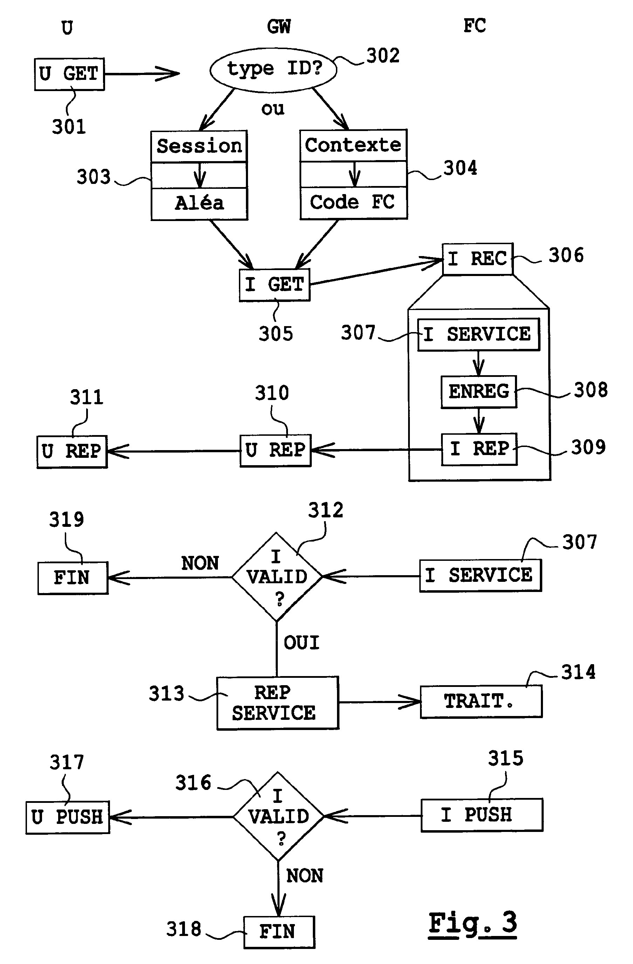

La figure 3 montre des étapes d'un scénario dans lequel le procédé selon l'invention est mis en oeuvre.

La figure 3 montre une étape 301 dans laquelle le téléphone 101 émet une requête à destination du fournisseur 102 de contenu. Cette requête comporte un identifiant 117 d'utilisateur, un identifiant 120 de fournisseur de contenu, et un champ 122 comportant la requête elle-même. Une telle requête est, par exemple, une requête GET ou "prendre", au format tel que défini par le protocole HTTP. A noter que puisque l'appareil 101 est un téléphone mobile, il s'agit alors du protocole WTP. La requête produite et émise à l'étape 301 est reçue dans une étape 302 par la passerelle 112. Dans l'étape 302 le microprocesseur 113 extrait de la requête l'identifiant 120 de fournisseur de contenu. Il parcourt alors la table 121 à la recherche de cet identifiant de fournisseur de contenu. Une fois qu'il a trouvé l'identifiant de fournisseur de contenu, le microprocesseur 113 est capable de déterminer un code pour ce fournisseur de contenu ainsi qu'une nature d'identifiant. Si l'identifiant du fournisseur de contenu n'apparaît pas dans la table 121, alors le microprocesseur 113 adopte un comportement par défaut. Dans notre exemple on admet que le comportement par défaut consiste à produire un identifiant isolant de session.

L'identifiant 120 est, dans un exemple préféré, une adresse au format IPV4 (Internet Protocol Version 4, pour protocole Internet version 4). Il peut aussi s'agir d'un numéro de téléphone d'un serveur vocal, ou SMS, ou MMS. Il peut aussi s'agir d'une adresse Internet au format IPV6 (Internet Protocol Version 6, pour protocole Internet version 6) ou d'une URL pour Universal Ressource Locator ou Localisation Universelle d'une Ressource.

Si l'identifiant 120 de fournisseur de contenu correspond, dans la table 121, à une nature d'identifiant isolant de session on passe à une étape 303 de production d'un identifiant isolant de session. Sinon on passe à une étape 304 de production d'un identifiant isolant de contexte.

Qu'il s'agisse d'un identifiant isolant de session ou de contexte, ils ont tous les deux la même structure qui est celle décrite pour la figure 2. Ce qui différencie un identifiant de session d'un identifiant de contexte est le contenu du champ 202. Dans le cas de l'identifiant de session le champ 202 comporte un aléa. Un tel aléa est par exemple le nombre de secondes écoulées depuis le 1^{er} janvier 1970 à 0h00. Un tel aléa peut aussi être n'importe quel nombre généré par un générateur de nombres pseudo-aléatoires initialisé par l'heure à laquelle a été produit l'aléa. L'aléa peut aussi être la valeur d'un compteur incrémenté à chaque nouvelle production d'un identifiant. D'une manière générale l'aléa est un nombre aléatoire ou pseudo-aléatoire.

Dans le cas d'un de l'identifiant de contexte, le champ 202 comporte par exemple un identifiant de fournisseur de contenu, ou une date.

Dans le cas des dates, pour le champ 202, il s'agit soit d'une date de création de l'identifiant isolant, soit d'une date d'expiration de la validité de l'identifiant isolant. Dans une variante, il se peut que les identifiants isolant de session et de contexte soient tous les deux formés à partir de dates. Dans ce cas un identifiant de contexte se distingue par sa durée de validité beaucoup plus importante que pour un identifiant de session dont la validité n'excède pas un quart d'heure.

Dans l'étape 304 le champ 202 correspond au code de fournisseur de contenu lu dans la mémoire 121 à l'étape 302. Ce code de fournisseur de contenu est alors de préférence un code numérique compatible avec le format en digit.

Le champ 204 permet, par exemple, de coder la nature de l'identifiant. Le champ 204 a donc une valeur quand il s'agit d'un identifiant isolant de session, et une autre valeur lorsqu'il s'agit d'un identifiant isolant de contexte. Lorsque la valeur du champ 202 est déterminée, le microprocesseur 113 est en mesure de produire un identifiant isolant selon l'invention. Le microprocesseur 113 chiffre l'ensemble formé par le champ 202 et le champ 201. Puis le microprocesseur 113 associe le résultat du chiffrement à un identifiant 203 de l'opérateur gérant la passerelle 102, et à la nature 204 de l'identifiant isolant. On obtient ainsi l'identifiant 118 isolant. On remarque que la taille de l'identifiant isolant peut être différente de la taille de l'identifiant 117.

Une fois l'identifiant 118 isolant produit, on passe à une étape 305 de production et d'émission d'une requête à destination du serveur 102. La requête produite à l'étape 305 comporte un identifiant isolant 118, un identifiant de fournisseur de contenu 120 et un champ 123 de requête. Dans la pratique les champs 120 et 123 sont identiques aux champs 120 et 122. Dans notre exemple, la requête produite à l'étape 305 est au format HTTP. Dans ce cas le champ 120 est alors une adresse IP de destination. Dans la pratique la requête produite à l'étape 305 par la passerelle 112 est à un format (voix, SMS, IP ...) compatible avec le serveur que cherche à joindre l'utilisateur du téléphone 101.

Le champ 118 identifiant isolant est un champ au format décrit pour la figure 2. L'identifiant 118 isolant comporte donc un champ identifiant l'opérateur ayant produit l'identifiant isolant, un champ permettant de coder la nature de l'identifiant isolant selon qu'il est de session ou de contexte, et un champ chiffré. Le champ chiffré une fois déchiffré comporte deux champs. Ces deux champs correspondent aux champs 202 et 201.

Dans l'invention il existe une contrainte supplémentaire lié au format du champ NDS. Le champ 118 doit être compatible avec le format NDS. Cela signifie que le champ 118 a une longueur de 15 digits, et que les champs 201 à 204 sont compris dans ces 15 digits.

Quel que soit le cas de figure, on considère que le champ 201 permet d'identifier un abonné du fournisseur d'accès. Classiquement le champ 201 comportera les digits significatifs d'un numéro de téléphone, soit 8 digits en France, 5 digits ou plus dans d'autres pays. Dans le cas de la France, le champ 201 est donc enregistré en utilisant les digits identifiants qui sont dans notre exemple les digits 8 à 15 inclus. Cela représente 8 digits, dans la pratique cela pourrait être n'importe quel groupe de 8 parmi les 15. Il reste donc 7 digits pour les champs 202 à 204.

On considère qu'un premier digit parmi les 7 restant, de préférence, le digit numéro 1 permet de coder l'entité ayant produit l'identifiant 200 isolant. Cela permet de coder 10 entités de type opérateur en respectant les normes sur le format du champ NDS, et 15 entités de type opérateur en ne les respectant pas. On l'appelle aussi digit producteur, il correspond au champs 203.

Dans une réalisation préférée, une deuxième digit parmi les 7 restant, par exemple le digit numéro 2, permet de coder la nature de l'identifiant, selon qu'il s'agit d'un identifiant de session, ou d'un identifiant de contexte. On l'appelle alors aussi digit de nature, il correspond au champ 204 et il est optionnel.

Dans une variante les digits restant, dans notre exemple les digits 2 à 7, servent à coder une date, par exemple au format mois, jour, heure, chaque information occupant 2 digits. On constate que dans cette variante le digit 2 code deux informations, une de nature, et une de date. Dans ce cas précis, on considère qu'une valeur de 0 ou 1 pour le digit 2 correspond à un identifiant de session, les digits 2 à 7 pouvant être interprété comme une date. Si le digit 2 vaut 3, alors les digits 3 à 7 sont un code de fournisseur de contenu, on a alors un identifiant de contexte. Si le digit 2 vaut un chiffre de 4 à 9, cela est réservé pour un usage ultérieur.

Il existe d'autre format possible pour coder une date. Par exemple, on peut la mesurer en fraction d'année depuis le début de l'année en cours. Si on considère des fractions de 1/900000 d'année, alors une valeur de 0 à 8 pour le digit 2 signifie que les digits 2 à 7 codent une date, et que l'identifiant est un identifiant temporaire, ou de session. Si on considère des fractions de 1/800000 d'année, alors une valeur de 0 à 7 pour le digit 2 signifie que les digits 2 à 7 codent une date, et que l'identifiant est un identifiant temporaire, ou de session.

Lorsque le digit 2 indique que l'identifiant est un identifiant de contexte, alors les digits 3 à 7 permettent de coder un fournisseur de contenu. Dans ce cas, un digit, parmi les digits 3 à 7 peut aussi permettre de coder une version d'un contrat liant le titulaire du numéro de téléphone utilisé pour produire l'identifiant isolant à l'opérateur produisant l'identifiant isolant. Un tel numéro de contrat est utile, par exemple, si le titulaire du numéro change, ou si le titulaire du numéro souhaite conserver son numéro, mais effacer toute trace de ses passages chez les fournisseurs de contenu.

Dans la pratique les informations de producteur et de nature ne sont pas chiffrées. Les autres informations, correspondant dans notre exemple aux digits 3 à 15 inclus, sont chiffrées. L'algorithme de chiffrement consomme un mot de 13 digits, et produit un mot de 13 digits. Ainsi l'identifiant 200 isolant produit reste compatible avec les normes imposant l'utilisation de digits. La taille des mots consommés / produits varie avec la taille des informations à chiffrer.

L'identifiant, au format NDS, ainsi produit est compatible avec tous les protocoles de transmission actuel.

Après avoir émis la requête, à l'étape 305, on passe à une étape 306 de réception de la requête émise l'étape 305 par le serveur 102. Dans l'étape 306 le serveur 102 a donc accès aux champs 118 et 123. Le champ 118 lui permet de consulter la table 106 à la recherche d'un certain nombre d'informations sur l'utilisateur se connectant au serveur 102. Dans la pratique s'il s'agit d'un identifiant isolant de session il y a peu de chances que la table 106 comporte des informations sur l'utilisateur. En effet un identifiant de session variant à chaque session, un même utilisateur ne se connectera pas deux fois au serveur 102 avec le même identifiant isolant de session. Pour cette description on entend par session une durée temporelle limitée à, par exemple, un quart d'heure. La durée de la session est aisément mesurable car un identifiant isolant de session selon l'invention comporte une information de date de création.

Un identifiant de contexte peut avoir une durée de vie beaucoup plus longue, par exemple de six mois à dix huit mois, voire plus. La durée de vie d'un identifiant de contexte est gérée, par exemple, par le clé utilisé pour effectuer le chiffrement qui change à la fréquence de la durée de vie d'un identifiant de contexte. La durée de vie d'un identifiant de contexte peut aussi être gérée par le contenu du champ 202 qui change à la fréquence de la durée de vie d'un identifiant de contexte.

Le choix de la durée de vie, et de son mode de gestion, revient à l'entité ayant la charge de la passerelle 112. Le fait que la durée de vie soit garantie permet à un fournisseur de contenu d'associer des informations, aussi appelé contexte, à cet identifiant isolant.

Parmi les actions possibles à l'étape 306 le serveur 102 peut produire et émettre une requête de service vers la passerelle 112 à partir de l'identifiant 118, c'est l'étape 307, il peut enregistrer des informations dans la table 106, c'est l'étape 308, et il peut produire et émettre une réponse à la requête de l'utilisateur du téléphone 101, c'est l'étape 309.

Lorsque le serveur 102 produit une réponse à la requête émise à l'étape 305 il constitue une trame de réponse comportant un champ 118 identifiant un utilisateur, un champ 120 comportant un identifiant du serveur effectuant la réponse, et un champ 123 qui comporte alors la réponse à la requête. Dans une étape 310, la passerelle 112 reçoit la réponse à la requête émise à l'étape 301. La passerelle 112 effectue alors un transcodage entre les identifiants 118 et 117 pour transmettre la réponse du serveur 102 au téléphone 101. On passe alors à une étape 311 de réception par l'appareil 101 de la réponse à la requête qu'il a émise à l'étape 301.

Dans l'étape 310 le transcodage d'identifiant peut s'accompagner d'une vérification de la validité de l'identifiant. Cette vérification s'effectue, par exemple, après avoir déchiffré la partie chiffrée de l'identifiant 118 isolant et ainsi récupérer la valeur du champ 202. La validation dépend alors de la nature de l'identifiant. S'il s'agit d'un identifiant de session, le champ 202 correspond à une date. On compare alors cette date à la date à laquelle a été reçue la réponse. Si la différence entre ces deux dates est supérieure à un délai prédéfini, par exemple un quart d'heure, alors la requête est considérée comme non valable et ne sera pas retransmise vers l'appareil 101.

S'il s'agit d'un identifiant de contexte, on compare alors le contenu du champ 202 au contenu du champ code dans la table 121 pour la ligne correspondant à l'identifiant 120. S'il y a adéquation la requête est valable, sinon la requête est rejetée.

Dans l'étape 307 le serveur 102 émet une requête de service à destination du serveur 112. Cette requête comporte un identifiant isolant d'utilisateur, un identifiant de fournisseur de contenus, et un champ de requête. Une telle requête peut porter, par exemple, sur une demande d'identification d'un utilisateur, une demande de localisation d'un utilisateur, ou une demande d'informations sur la nature de l'appareil utilisé par l'utilisateur pour se connecter au serveur 102. Cette liste n'est pas exhaustive. Le serveur 112 reçoit à l'étape 312 la requête de demande de service. Dans l'étape 312 la passerelle 112 commence par vérifier la validité de l'identifiant isolant. Cette vérification se fait comme précédemment décrit. Si l'identifiant n'est pas valide, on passe à une étape 319 de fin dans laquelle la passerelle 112 ne donne pas suite à la requête de service, sinon on passe à une étape 314 de réponse à la requête de service.

Dans une variante de l'invention la table 121 comporte en plus, pour chaque fournisseur de contenu, une liste des services auxquels peut prétendre le fournisseur de contenu. Dans l'étape 313 la passerelle 112 vérifie alors que le fournisseur de contenu émettant la requête a bien le droit d'émettre cette requête, c'est à dire de prétendre à ce service. Si c'est le cas, la passerelle 112 produit une réponse à cette requête service et transmet la réponse au serveur 102. Sinon il n'y a pas de réponse à la requête de service.

Dans une étape 314 le serveur 102 reçoit la réponse à la requête de service. Cette réponse permet au serveur 102 de mettre à jour la table 106 ou de produire la réponse de l'étape 309. En effet on peut envisager que la requête émise à l'étape 301 ait été une requête pour connaître la liste des restaurants proches de l'endroit où se trouve l'utilisateur. Dans ce cas le serveur 102 a besoin de connaître la localisation de l'utilisateur, le serveur 102 émet donc une requête de localisation vers la passerelle 112. La réponse de cette localisation permet au serveur 102 d'envoyer la réponse appropriée à l'utilisateur de l'appareil 101.

Grâce à un identifiant selon l'invention le serveur 102 peut aussi, dans une étape 315, émettre une requête entrante à destination de l'appareil 101. Cette requête entrante est alors reçue dans une étape 316 par la passerelle 112. Cette requête entrante est soumise à la vérification de l'identifiant 118. Cette vérification est identique aux vérifications décrites pour les étapes 310 et 312 et 313. C'est-à-dire, il faut que le fournisseur de contenu identifié par le champ 120 soit habilité à émettre une requête entrante et qu'en plus l'identifiant 118 soit valide. Si l'identifiant n'est pas valide, on passe à une étape 318 de fin dans laquelle aucune suite n'est donnée à la requête entrante émise par le serveur 102.

Si l'étape 316 révèle que la requête entrante émise à l'étape 315 est valide alors la passerelle 112 transcode l'identifiant 118 isolant vers un identifiant 117 et transmet la requête entrante transcodée au téléphone 101. Dans une étape 317 le téléphone 101 reçoit et traite cette requête entrante. Une telle requête entrante est, par exemple, une mise à jour d'une base de données dans l'appareil 101. Une telle base de données peut, par exemple, concerner des contacts que l'utilisateur de l'appareil 101 souhaite conserver, ou une liste de serveurs auxquels l'appareil 101 peut se connecter pour accéder à différents services.

L'algorithme de chiffrement utilisé pour chiffrer les champs 202 et 201 est de préférence l'algorithme de la famille DES (Data Encryption Standard, pour système de chiffrement de données). Il peut s'agir de sa version de chiffrement par bloc, ou de sa version de chiffrement chaîné. La version de chiffrement chaînée permet d'assurer que toutes les parties chiffrées de l'identifiant 200 seront différentes grâce au champ 202 variable. Dans des variantes de l'invention on peut utiliser d'autres algorithmes de chiffrement comme par exemple ceux de la famille AES (Advanced Encryption Standard, pour système de chiffrement avancé).

Un avantage de l'invention, et des identifiants isolants de contexte qu'elle définit, est que cela permet d'avoir, pour un utilisateur, un identifiant de contexte différent par fournisseur de contenu. Il est ainsi impossible à un fournisseur de contenu de recouper ses bases de données avec celles d'autres fournisseurs de contenu pour pouvoir mieux connaître la vie privée d'un utilisateur identifié par l'identifiant. Il est aussi impossible de piller une base de donnée, ou de violer la secret des communications. On obtient donc ainsi une protection maximale de la vie privée de l'utilisateur.

On satisfait aussi aux exigences légales puisqu'il est possible, à partir d'un identifiant et uniquement pour l'opérateur ayant produit cet identifiant, de remonter jusqu'à l'utilisateur physique.

Un utilisateur peut choisir qu'il se connectera toujours en utilisant un identifiant de session. Ainsi, lors de deux connexion raisonnablement espacée dans le temps, l'utilisateur ayant fait ce choix se connectera à un même site en présentant deux identifiant isolant différents. Le fournisseur de contenu n'a alors aucun moyen de déterminer que c'est le même utilisateur qui s'est connecter deux fois.

Un utilisateur peut choisir d'avoir recours à un identifiant de contexte. Dans ce cas la passerelle 112 produira un identifiant isolant de contexte lors des connexion de l'utilisateur ayant fait ce choix. Le fournisseur de contenu pourra alors adapter ses réponses en fonctions des informations qu'il est capable de rattacher à l'identifiant isolant de contexte.

Le choix de l'utilisateur est géré, sur la passerelle 112, via une table associant un identifiant utilisateur, du type de l'identifiant 117, à un choix de l'utilisateur.

L'invention est totalement transposable si on considère un utilisateur qui utilise un ordinateur individuel pour se connecter à un fournisseur de contenu via un fournisseur d'accès à Internet (ou FAI). Dans ce cas le mode de connexion de l'ordinateur individuel à la passerelle est hertzien (GSM, UMTS...), câblé (réseau téléphonique commuté..), ou autre.

L'invention présente aussi l'avantage de dispenser l'entité gérant les identifiant isolant d'avoir à stocker ces identifiants isolants. En effet, comme ces identifiants sont calculés à partir de données facilement accessible au moment du calcul, il n'est nul besoin de les stocker.

## Revendications

1. Procédé de production, par une passerelle (112) d'un fournisseur d'accès, d'un premier identifiant (118, 200) isolant utilisateur multimédia compatible avec des identifiants (117) d'un réseau de téléphonie, ladite passerelle produit le premier identifiant au format suivant:
- le premier identifiant comporte N digits identifiant permettant de désigner l'utilisateur,
- le premier identifiant comporte au moins un digit de nature permettant de définir la nature du premier identifiant,
- le premier identifiant comporte M digits de variabilité,
**caractérisé en ce que**:
- les M digits de variabilité dépendent du digit de nature,
- le premier identifiant a une taille maximale de 15 digits, un digit étant une représentation informatique permettant de représenter/coder un chiffre décimal ou hexadécimal et comportant 4 bits,
- le premier identifiant comporte au moins un digit producteur permettant de désigner le producteur de l'identifiant.

2. Procédé selon la revendication 1, **caractérisé en ce que** un digit est une représentation informatique permettant de coder un chiffre décimal.

3. Procédé selon la revendication 1, **caractérisé en ce que** un digit est une représentation informatique permettant de coder un chiffre hexadécimal.

4. Procédé selon l'une des revendications 1 à 3, **caractérisé en ce que** les digits identifiants correspondent a un numéro de téléphone de l'utilisateur.

5. Procédé selon la revendication 4, **caractérisé en ce que** les digits identifiants sont les digits 8 à 15 inclus, N valant alors 8.

6. Procédé selon l'une des revendications 1 à 5, **caractérisé en ce que** le digit producteur est le digit 1.

7. Procédé selon l'une des revendications 1 à 6, **caractérisé en ce que** le digit nature est le digit 2.

8. Procédé selon l'une des revendications 1 à 7, **caractérisé en ce que** les M digits, de préférence les digits 2 à 7, permettent de coder une date.

9. Procédé selon l'une des revendications 1 à 8, **caractérisé en ce que** les M digits, de préférence les digits 2 à 7, permettent de coder une date au format mois, jour, heure "mmjjhh".

10. Procédé selon la revendication 9, **caractérisé en ce que** une valeur de 0 ou 1 pour le digit 2 correspond à un identifiant temporaire.

11. Procédé selon l'une des revendications 1 à 8, **caractérisé en ce que** les M digits, de préférence les digits 2 à 7, représentent la durée écoulée depuis le début de l'année en cours en fraction de 1/900 000.

12. Procédé selon la revendication 11, **caractérisé en ce que** une valeur de 0, 1, 2, 3, 4, 5, 6, 7, ou 8 pour le digit 2 correspond à un identifiant temporaire.

13. Procédé selon l'une des revendications 1 à 8, **caractérisé en ce que** les M digits, de préférence les digits 2 à 7, représentent la durée écoulée depuis le début de l'année en cours en fraction de 1/800 000.

14. Procédé selon la revendication 13, **caractérisé en ce que** une valeur de 0, 1, 2, 3, 4, 5, 6, ou 7 pour le digit 2 correspond à un identifiant temporaire.

15. Procédé selon l'une des revendications 1 à 7, **caractérisé en ce que** les M digits de variabilité permettent d'identifier un fournisseur de contenu.

16. Procédé selon la revendication 15, **caractérisé en ce que** M-1 digits parmi les M permettent d'identifier le fournisseur de contenu, 1 digit parmi les M permet d'identifier un contrat entre l'utilisateur et le fournisseur d'accès.

17. Procédé selon l'une des revendications 1 à 16, **caractérisé en ce que** les digits identifiants et les digits de variabilité sont chiffrés.

18. Procédé selon la revendication 17, **caractérisé en ce que** l'algorithme de chiffrement est symétrique et produit des digits.

## Claims

1. A method of producing, through a gateway (112) of an access provider, a first isolating identifier (118, 200) of a multimedia user that is compatible with identifiers (117) of a telephony network, said gateway produces the first identifier in the following format:
- the first identifier comprises N identifier digits for designating the user,
- the first identifier comprises at least one nature digit for defining the nature of the first identifier,
- the first identifier comprises M variability digits,
**characterized in that**:
- the M variability digits depend on the nature digit,
- the first identifier has a maximum size of 15 digits, one digit being a computer representation for representing/encoding a decimal or hexadecimal digit and comprising 4 bits,
- the first identifier comprises at least one producer digit for designating the producer of the identifier.

2. The method as set forth in claim 1, **characterized in that** a digit is a computer representation for encoding a decimal number.

3. The method as set forth in claim 1, **characterized in that** a digit is a computer representation for encoding a hexadecimal number.

4. The method as set forth in any one of the claims 1 through 3, **characterized in that** the identifier digits correspond to a phone number of the user.

5. The method as set forth in claim 4, **characterized in that** the identifier digits are the digits 8 through 15, with N then being 8.

6. The method as set forth in any one of the claims 1 through 5, **characterized in that** the producer digit is the digit 1.

7. The method as set forth in any one of the claims 1 through 6, **characterized in that** the nature digit is the digit 2.

8. The method as set forth in any one of the claims 1 through 7, **characterized in that** the M digits, preferably the digits 2 through 7, make it possible to encode a date.

9. The method as set forth in any one of the claims 1 through 8, **characterized in that** the M digits, preferably the digits 2 through 7, make it possible to encode a date in the format month, day, hour "mmddhh".

10. The method as set forth in claim 9, **characterized in that** a value of 0 or 1 for the digit 2 corresponds to a temporary identifier.

11. The method as set forth in any one of the claims 1 through 8, **characterized in that** the M digits, preferably the digits 2 through 7, represent the time past since the beginning of the current year as a fraction of 1/900 000.

12. The method as set forth in claim 11, **characterized in that** a value of 0, 1, 2, 3, 4, 5, 6, 7 or 8 for the digit 2 corresponds to a temporary identifier.

13. The method as set forth in any one of the claims 1 through 8, **characterized in that** the M digits, preferably the digits 2 through 7, represent the time past since the beginning of the current year as a fraction of 1/800 000.

14. The method as set forth in claim 13, **characterized in that** a value of 0, 1, 2, 3, 4, 5, 6 or 7 for the digit 2 corresponds to a temporary identifier.

15. The method as set forth in any one of the claims 1 through 7, **characterized in that** the M variability digits make it possible to identify a content provider.

16. The method as set forth in claim 15, **characterized in that** among the M, M-1 digits make it possible to identify the content provider and that among the M, 1 digit makes it possible to identify a contract between the user and the access provider.

17. The method as set forth in any one of the claims 1 through 16, **characterized in that** the identifier digits and the variability digits are encrypted.

18. The method as set forth in claim 17, **characterized in that** the encryption algorithm is symmetric and produces digits.

## Patentansprüche

1. Verfahren zur Erzeugung, über eine Schnittstelle (112) eines Zugangsproviders, einer ersten isolierenden Identifizierung (118, 200) eines Multimedianutzers, die mit Identifizierungen (117) eines Telefonienetzwerkes kompatibel ist, wobei die Schnittstelle die erste Identifizierung im folgenden Format erzeugt:
- die erste Identifizierung weist N Identifizierungszeichen auf, mit denen der Benutzer bezeichnet werden kann,
- die erste Identifizierung weist wenigstens ein Naturzeichen auf, mit dem die Natur der ersten Identifizierung definiert werden kann,
- die erste Identifizierung weist M Variabilitätszeichen auf,
**dadurch gekennzeichnet, dass**:
- die M Variabilitätszeichen von dem Naturzeichen abhängen,
- die erste Identifizierung hat eine Maximalgröße von 15 Zeichen, wobei ein Zeichen eine Computerdarstellung ist, mit der eine Dezimalzahl oder eine Hexadezimalzahl dargestellt/kodiert werden kann und die 4 Bits aufweist,
- die erste Identifizierung weist mindestens ein Erzeugerzeichen auf, mit dem der Erzeuger der Identifizierung bezeichnet werden kann.

2. Verfahren nach Anspruch 1, **dadurch gekennzeichnet, dass** ein Zeichen eine Computerdarstellung ist, mit der eine Dezimalzahl kodiert werden kann.

3. Verfahren nach Anspruch 1, **dadurch gekennzeichnet, dass** ein Zeichen eine. Computerdarstellung ist, mit der eine Hexadezimalzahl kodiert werden kann.

4. Verfahren nach einem der Ansprüche 1 bis 3, **dadurch gekennzeichnet, dass** die Identifizierungszeichen einer Telefonnummer des Benutzers entsprechen.

5. Verfahren nach Anspruch 4, **dadurch gekennzeichnet, dass** die Identifizierungszeichen die Zeichen 8 bis einschließlich 15 sind, wobei N dann 8 beträgt.

6. Verfahren nach einem der Ansprüche 1 bis 5, **dadurch gekennzeichnet, dass** das Erzeugerzeichen das Zeichen 1 ist.

7. Verfahren nach einem der Ansprüche 1 bis 6, **dadurch gekennzeichnet, dass** das Naturzeichen das Zeichen 2 ist.

8. Verfahren nach einem der Ansprüche 1 bis 7, **dadurch gekennzeichnet, dass** mit den M Zeichen, vorzugsweise mit den Zeichen 2 bis 7, ein Datum kodiert werden kann.

9. Verfahren nach einem der Ansprüche 1 bis 8, **dadurch gekennzeichnet, dass** mit den M Zeichen, vorzugsweise mit den Zeichen 2 bis 7, ein Datum im Format Monat, Tag, Stunde "MMTThh" kodiert werden kann.

10. Verfahren nach Anspruch 9, **dadurch gekennzeichnet, dass** ein Wert von 0 oder 1 für das Zeichen 2 einer temporären Identifizierung entspricht.

11. Verfahren nach einem der Ansprüche 1 bis 8, **dadurch gekennzeichnet, dass** die M Zeichen, vorzugsweise die Zeichen 2 bis 7, mit einer Bruchzahl von 1/900 000 den Zeitraum darstellen, der seit dem Anfang des laufenden Jahres vergangen ist.

12. Verfahren nach Anspruch 11, **dadurch gekennzeichnet, dass** ein Wert von 0, 1, 2, 3, 4, 5, 6, 7 oder 8 für das Zeichen 2 einer temporären Identifizierung entspricht.

13. Verfahren nach einem der Ansprüche 1 bis 8, **dadurch gekennzeichnet, dass** die M Zeichen, vorzugsweise die Zeichen 2 bis 7, mit einer Bruchzahl von 1/800 000 den Zeitraum darstellen, der seit dem Anfang des laufenden Jahres vergangen ist.

14. Verfahren nach Anspruch 13, **dadurch gekennzeichnet, dass** ein Wert von 0, 1, 2, 3, 4, 5, 6 oder 7 für das Zeichen 2 einer temporären Identifizierung entspricht.

15. Verfahren nach einem der Ansprüche 1 bis 7, **dadurch gekennzeichnet, dass** mit den M Variabilitätszeichen ein Inhaltsprovider identifiziert werden kann.

16. Verfahren nach Anspruch 15, **dadurch gekennzeichnet, dass** von den M Zeichen M-1 Zeichen den Inhaltsprovider identifizieren und von den M Zeichen 1 Zeichen einen Vertrag zwischen dem Benutzer und dem Zugangsprovider identifizieren kann.

17. Verfahren nach einem der Ansprüche 1 bis 16, **dadurch gekennzeichnet, dass** die Identifizierungszeichen und die Variabilitätszeichen chiffriert sind.

18. Verfahren nach Anspruch 17, **dadurch gekennzeichnet, dass** der Chiffrieralgorithmus symmetrisch ist und Zeichen erzeugt.
